# EUROPÄISCHE PATENTSCHRIFT

(11) **EP 0 901 007 B1**
(45) Veröffentlichungstag und Bekanntmachung des Hinweises auf die Patenterteilung: **20.07.2005**
(21) Anmeldenummer: 98115486.7
(22) Anmeldetag: 18.08.1998
(51) Int. Cl.: G01M 7/04, G01M 7/02

(54) **Prüfvorrichtung für Dämpfungselemente von Laufschaufeln**
Test device for vibration dampers of turbine vanes
Dispositif d'essai d'amortisseurs de vibration d'aubes

(30) Priorität: 04.09.1997 DE 19738595
(43) Veröffentlichungstag der Anmeldung: 10.03.1999
(73) Patentinhaber: MTU Aero Engines GmbH, 80995 München (DE)
(72) Erfinder: Pileri, Pierluigi, 81245 München (DE); Hoffelner, Herbert, 85220 Markt Indersdorf (DE)

(56) Entgegenhaltungen:
- US-A- 3 690 160
- PATENT ABSTRACTS OF JAPAN vol. 009, no. 058 (P-341), 14. März 1985 (1985-03-14) & JP 59 193334 A (MITSUBISHI JUKOGYO KK), 1. November 1984 (1984-11-01)

## Beschreibung

Die Erfindung betrifft eine Prüfvorrichtung für Dämpfungselemente von Laufschaufeln, mit einer an einer Schwingungsvorrichtung anzubringenden Halteeinrichtung, in der wenigstens zwei Schaufeln gehalten sind, wobei zwischen der Halteeinrichtung und den Schaufeln ein zu prüfendes Dämpfungselement anzuordnen ist.

Derartige Dämpfungselemente werden bei rotierenden Bauteilen von Turbinen, wie Laufschaufeln, eingesetzt. Da die Laufschaufeln hinsichtlich Material und Form nahezu optimiert sind, ist der Einsatz von Dämpfungselementen bei zu hohen Amplituden der während des Betriebs schwingenden Schaufelblätter erforderlich. Versuche haben gezeigt, daß die im allgemeinen aus Stahl bestehenden Dämpfungselemente die Amplitude der schwingenden Schaufelblätter durch Umwandlung der Energie in Reibung wirksam verringern, wobei eine ' Frequenzverschiebung auftritt.

Es hat sich aufgrund der aufwendigen und kostspieligen Montagearbeiten und Meßverfahren als nachteilig erwiesen, die Versuche zur Auslegung der Dämpfungselemente an einem rotierenden, d.h. realen System durchzuführen. Zudem ist die Streuung der Meßwerte der einzelnen Schaufelblätter eines Systems groß, so daß entsprechende Meßergebnisse nur eine geringe Aussagekraft besitzen.

Es ist daher sinnvoll, bei der Auslegung von Dämpfungselementen zunächst Vorversuche an einem statischen System durchzuführen. Bei solchen Vorversuchen werden wenigstens zwei Schaufelblätter in einer Prüfvorrichtung gehalten und durch eine Schwingvorrichtung bzw. einen Schwingtisch, in dem die Prüfvorrichtung befestigt ist, zu Schwingungen angeregt. Im Gegensatz zum rotierenden System läßt sich die zu prüfende Frequenz der Schaufelblätter genau einstellen und die Amplitude mit Lasern od. dgl. präzise messen. Die erzielbaren Meßergebnisse liefern konkrete Aussagen über die Verhältnisse an den Schaufelblättern und sind Grundlage für eine erste Auslegung der Dämpfungselemente nach ihrer Masse und Steifigkeit. Die so optimierten Dämpfungselemente werden anschließend im rotierenden System unter realen Betriebsbedingungen abschließend untersucht.

Probleme bereitet bei den Vorversuchen im statischen System jedoch die Simulation der Fliehkraft. Bei bekannten Prüfvorrichtungen werden hierfür Drähte an dem zwischen den Laufschaufeln und der Halteeinrichtung eingespannten und zu prüfenden Dämpfungselement befestigt, an die über eine Umlenkung und ein Gewicht eine Zugkraft angelegt wird, mit der die Dämpfungselemente gegen die Laufschaufeln und von der Prüfvorrichtung weg gedrückt werden. Die die Fliehkraft simulierenden Kräfte werden dabei nur punktuell an dem Dämpfungselement angelegt und entsprechen daher nicht den wahren Betriebsbedingungen. Zu dem leidet die Qualität der Meßergebnisse unter den Verfälschungen durch das aufwendige mechanische System.

Eine weitere Prüfeinrichtung ist im Dokument US-A-3 690 160 aufgeführt.

Der Erfindung liegt die Aufgabe zugrunde, eine Prüfvorrichtung der eingangs beschriebenen Gattung zu schaffen, mit der sich die Fliehkräfte zur Auslegung von Dämpfungselementen im statischen System möglichst genau einstellen und praxisnah simulieren lassen.

Die Lösung der Aufgabe ist erfindungsgemäß dadurch gekennzeichnet, daß wenigstens ein mit Druck beaufschlagbarer, dehnbarer Körper zwischen der Halteeinrichtung und dem Dämpfungselement angeordnet ist.

Ein Vorteil der erfindungsgemäßen Prüfvorrichtung besteht darin, daß der mit Druck beaufschlagbare Körper, der unterschiedliche Formen, wie ein Kissen, ein Schlauch etc. aufweisen kann, nicht lediglich punktuell gegen das Dämpfungselement drückt, so daß die die ' Fliehkraft simulierende Kraft das spezifische Verhalten des Bauteils/des Schaufelblatts nicht beeinflußt und keine Verfälschung der Meßwerte auftritt. Darüber hinaus lassen sich durch einfaches Verstellen des Drucks unterschiedlich große Fliehkräfte von bis zu 6000 N und mithin verschiedene Betriebsbedingungen simulieren.

Bevorzugt stützt sich der Körper im druckbeaufschlagten Zustand an der Halteeinrichtung ab und drückt flächig gegen das Dämpfungselement, wobei der Körper höchst bevorzugt in einer Aussparung angeordnet ist und somit bis auf seinen gegen das Dämpfungselement drückenden Bereich eingebettet ist.

Es ist vorteilhaft, daß das Dämpfungselement eine offene Seite der Aussparung vollständig bedeckt, so daß der Körper im druckbeaufschlagten Zustand gegen eine möglichst große Fläche des Dämpfungselements drückt.

Weiterhin ist vorteilhaft, daß sich der Körper im druckbeaufschlagten Zustand vollständig an eine über der Aussparung liegende Unterseite des Dämpfungselements anlegt.

Bevorzugt ist der Körper mit einem Druck bis zu 15 bar beaufschlagbar.

Höchst bevorzugt besteht der Körper aus einem Elastomer, wobei auch andere elastische Kunststoffe oder Kautschuk einsetzbar sind.

In einer bevorzugten Ausgestaltung ist der Körper ein Schlauch, wobei die Schaufeln bevorzugt hintereinander in einer in der Grundfläche der Halteeinrichtung ausgebildeten, länglichen Nut gehalten sind, zu deren beiden Seiten jeweils ein solcher sich parallel zu der Nut erstreckender Schlauch vorgesehen ist.

Es ist vorteilhaft, daß die Schläuche jeweils in einer länglichen Aussparung, die in der Halteeinrichtung oder einer darauf angebrachten Stützplatte ausgebildet sein kann und sich parallel zu der Nut erstrecken kann, angeordnet und mithin eingebettet sind.

Bevorzugt sind die Querschnittsflächen der Schläuche im nicht mit Druck beaufschlagten Zustand kleiner als jene der Aussparungen, wobei höchst bevorzugt die Tiefe der Aussparung kleiner als der Durchmesser der Schläuche ist, so daß die Schläuche im nicht mit Druck beaufschlagten Zustand in der Aussparung flachgedrückt sind und im druckbeaufschlagten Zustand mit einer möglichst großen Fläche gegen das darüberliegende Dämpfungselement drücken.

Es ist zweckmäßig, daß die Schläuche mit ihren von der Druckerzeugung entfernten Enden zu einem Schlauch zusammengeführt sind, in dem ein Druckmesser vorgesehen ist, so daß in beiden Schläuchen der gleiche Druck vorliegt und das Dämpfungselement möglichst gleichmäßig über seine Fläche weggedrückt wird.

Bevorzugt ist die Grundfläche der Halteeinrichtung in Richtung der hintereinander angeordneten Schaufeln, d.h. in Längsrichtung der (Halte-)Nut, nach außen gekrümmt, wodurch die Anordnung der Schaufeln entlang eines Umfangs im realen System angenähert ist.

Weitere bevorzugte Ausgestaltungen der Erfindung sind in den Unteransprüchen beschrieben.

Im folgenden wird die Erfindung anhand eines Ausführungsbeispiels unter Bezugnahme auf eine schematische Zeichnung näher erläutert. Es zeigt:
Fig. 1 eine Seitenansicht eines Ausführungsbeispiels der erfindungsgemäßen Prüfvorrichtung und
Fig. 2 eine Seitenansicht im Schnitt entlang der Linie II-II aus Fig. 1, wobei geschnittene Teile zur besseren Übersicht nicht schraffiert sind.

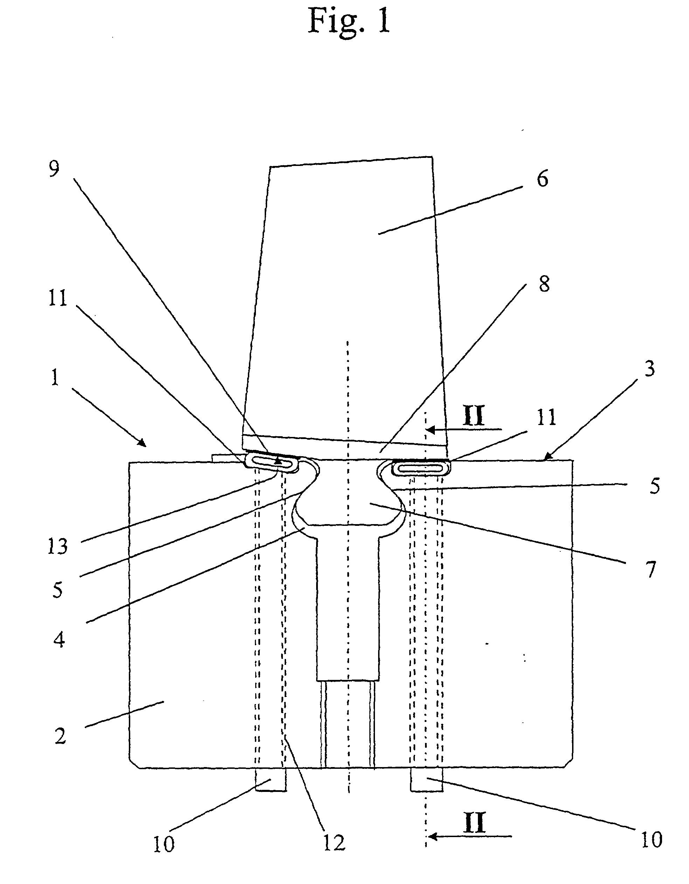

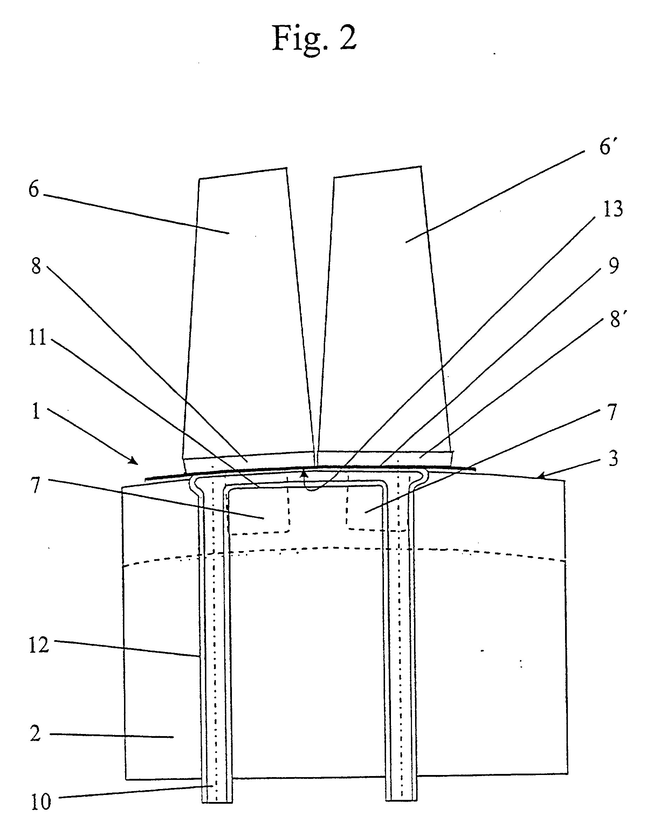

In Fig. 1 ist ein im ganzen mit 1 bezeichnetes Ausführungsbeispiel der erfindungsgemäßen Prüfvorrichtung für Dämpfungselemente von Laufschaufeln in einer Seitenansicht schematisch dargestellt. Die Prüfvorrichtung 1 umfaßt eine Halteeinrichtung 2, die in einer nicht dargestellten Schwingvorrichtung bzw. einem sog. Shaker befestigt ist. Die Halteeinrichtung 2 weist eine Grundfläche 3 auf, in der eine längliche Nut 4 mit Hinterschneidungen 5 ausgebildet ist. In der in Fig. 1 im Querschnitt gezeigten Nut 4 werden zwei Schaufeln 6 mit ihren Füssen bzw. Vorsprüngen 7, die mit den Hinterschneidungen 5 der Nut 4 zusammenwirken, gehalten. Die Schaufeln 6 stützen sich an ihren als innere Strömungsbegrenzer dienenden Plattformen 8 gegenseitig ab und werden somit in gleicher Weise hintereinander gehalten, wie dieses bei einem realen System entlang eines Umfangs erfolgt. Ein solcher Umfang wird durch die in Fig. 2 gezeigte Krümmung der Grundfläche 3 angedeutet. Die Grundfläche 3 kann im statischen System ohne weiteres auch eben ausgebildet sein.

Unterhalb der Plattformen 8 der Schaufelblätter 6 wird ein zu prüfendes Dämpfungselement 9 angeordnet, das dort im allgemeinen eingeklemmt ist, so daß die Schaufeln 6 und die Halteeinrichtung 2 miteinander verspannt sind. Die Dämpfungselemente 9 bestehen im allgemeinen aus (Stahl-)Blech und können unterschiedliche Formen, wie z.B. eben, keilförmig etc., aufweisen. Die Dämpfungselemente 9 dienen dazu, zu große Amplituden der während des Betriebs schwingenden Schaufelblätter 6 zu verringern, indem sie Energie in Reibung umwandeln. Um eine möglichst effiziente Dämpfung zu erzielen, werden die Dämpfungselemente 9 zunächst im Rahmen von Vorversuchen in der Prüfvorrichtung 1, d.h. in einem statischen System, hinsichtlich ihrer Masse und Steifigkeit ausgelegt.

Zur Simulation der im realen, rotierenden System auftretenden Fliehkräfte sind unterhalb des Dämpfungselementes 9 zwei mit Druck beaufschlagbare, dehnbare bzw. elastische Körper 10, wie (Gummi-)Schläuche, vorgesehen. Die beiden Schläuche 10 sind jeweils in einer länglichen, sich parallel zur Nut 4 erstreckenden, einen konstanten Querschnitt aufweisenden Aussparung 11 eingebettet. Im vorliegenden Ausführungsbeispiel hat eine der beiden Aussparungen 11 eine geringere Tiefe als die andere, so daß der entsprechende Schlauch 10 seitlich durch ein zusätzliches Teil gestützt wird. Im allgemeinen haben die beiden Aussparungen 11 jedoch identische Abmessungen und sind mithin gleich tief.

Wie in Fig. 2 dargestellt ist, erstrecken sich die Aussparungen 11 etwa über die gesamte Länge der beiden hintereinander angeordneten Schaufeln 6, d.h. von einem ersten Ende der Plattform 8 der Schaufel 6 bis zu einem zweiten, gegenüberliegenden Ende der Plattform 8' der anderen Schaufel 6'. Die Schläuche 10 werden jeweils durch eine zur einfachen Fertigung annähernd rechtwinklig zur Grundfläche 3 der Halteeinrichtung 2 verlaufende Bohrung 12 zu einem Ende der Aussparung 11 hingeführt und durch eine ebensolche Bohrung 12 von dem anderen gegenüberliegenden Ende der Aussparung 11 weggeführt. Die jeweiligen Übergänge von den Bohrungen 12 zu den beiden sich im wesentlichen parallel zur Grundfläche 3 erstreckenden Aussparungen 11 erfolgt mit ausreichend großen Radien, so daß ein Knicken der Schläuche 11 nicht auftritt. Die Breite der Aussparungen 11 ist größer und deren Tiefe kleiner als der Durchmesser des Schlauches 10 im nicht mit Druck beaufschlagten Zustand.

In der vorliegenden Ausgestaltung liegt das Dämpfungselement 9 mit seiner Unterseite 13 auf der Grundfläche 3 auf und deckt die obere, offene Seite der Aussparung 11 annähernd vollständig ab. Aufgrunddessen sind die Schläuche 10 nach der Anordnung des Dämpfungselementes 9, wie in Fig. 1 zu erkennen ist, im nicht mit Druck beaufschlagten Zustand flach zusammengedrückt.

Bei der Durchführung der Vorversuche zur Auslegung der Dämpfungselemente 9 hinsichtlich ihrer Masse und Steifigkeit werden die Schaufelblätter 6 durch die nicht gezeigte Schwingvorrichtung, an der die Halteeinrichtung 2 befestigt ist, zu Schwingungen angeregt. Die dabei einstellbaren Frequenzen sind in einem großen Bereich frei wählbar und liegen bspw. zwischen 1.000 und 10.000 Hz. Auf diese Weise lassen sich im statischen System unterschiedlichste Betriebsbedingungen untersuchen.

Zur Simulation der im rotierenden System auftretenden Fliehkräfte werden die Schläuche 10 mit Druck, der bis zu 15 bar betragen kann, beaufschlagt. Wie Fig. 2 zeigt, dehnen sich die elastischen Schläuche 10 infolge des Druckes aus und füllen die Aussparungen 11 vollstän- ' dig aus. Dabei legen sich die Schläuche 10 an die Wandungen der Aussparungen 11 und an die über den Aussparungen 11 liegende Unterseite 13 des Dämpfungselements 9 an und drücken so das zwischen den Schläuchen 10 und den Plattformen 8, 8' der Schaufelblätter 6, 6' angeordnete Dämpfungselement 9 zusammen mit den Schaufelblättern 6 von der Halteeinrichtung 2 weg. Der Druck liegt somit flächig an den Dämpfungselementen 9 an. Auf diese Weise lassen sich Fliehkräfte bis zu ca. 6000 N simulieren. Die auftretenden Amplituden der schwingenden Schaufelblätter 6 können bei den Vorversuchen in einem statischen System, wie bei der erfindungsgemäßen Prüfvorrichtung 1, durch Laser od. dgl. genau gemessen werden. Zudem lassen sich bei den eingestellten Parametern (Frequenz, Druck) durch einfaches Auswechseln unterschiedliche Dämpfungselemente 9 untersuchen, ohne daß dazu aufwendige Montagearbeiten erforderlich sind, wie dieses bei Versuchen im (realen) rotierenden System notwendig ist.

## Patentansprüche

1. Prüfvorrichtung für Dämpfungselemente von Laufschaufeln, mit einer an einer Schwingvorrichtung anzubringenden Halteeinrichtung, in der wenigstens zwei Schaufeln gehalten sind, wobei zwischen der Halteeinrichtung und den Schaufeln ein Dämpfungselement anzuordnen ist, **dadurch gekennzeichnet, daß** wenigstens ein mit Druck beaufschlagbarer, dehnbarer Körper (10) zwischen der Halteeinrichtung (2) und dem Dämpfungselement (9) angeordnet ist.

2. Prüfvorrichtung nach Anspruch 1, **dadurch gekennzeichnet, daß** sich der Körper (10) im druckbeaufschlagten Zustand an der Halteeinrichtung (2) abstützt und flächig gegen das Dämpfungselement (9) drückt.

3. Prüfvorrichtung nach Anspruch 1 oder 2, **dadurch gekennzeichnet, daß** der Körper (10) in einer Aussparung (11) angeordnet ist.

4. Prüfvorrichtung nach Anspruch 3, **dadurch gekennzeichnet, daß** die Aussparung (11) in einer Grundfläche (3) der Halteeinrichtung (2) ausgebildet ist.

5. Prüfvorrichtung nach Anspruch 3, **dadurch gekennzeichnet, daß** die Aussparung (11) in einer auf der Grundfläche (3) der Halteeinrichtung (2) angeordneten Stützplatte ausgebildet ist.

6. Prüfvorrichtung nach einem oder mehreren der Ansprüche 3 bis 5, **dadurch gekennzeichnet, daß** das Dämpfungselement (9) eine offene Seite der Aussparung (11) vollständig bedeckt.

7. Prüfvorrichtung nach einem oder mehreren der Ansprüche 3 bis 6, **dadurch gekennzeichnet, daß** sich der Körper (10) im druckbeaufschlagten Zustand vollständig an eine über der Aussparung (11) liegende Unterseite (13) des Dämpfungselements (9) anlegt.

8. Prüfvorrichtung nach einem oder mehreren der vorhergehenden Ansprüche, **dadurch gekennzeichnet, daß** der Körper (10) mit einem Druck bis zu 15 bar beaufschlagbar ist.

9. Prüfvorrichtung nach einem oder mehreren der vorhergehenden Ansprüche, **dadurch gekennzeichnet, daß** der Körper (10) aus einem Elastomer besteht.

10. Prüfvorrichtung nach einem oder mehreren der vorhergehenden Ansprüche, **dadurch gekennzeichnet, daß** der Körper (10) ein Schlauch ist.

11. Prüfvorrichtung nach Anspruch 10, **dadurch gekennzeichnet, daß** die Schaufeln (6) hintereinander in einer in der Grundfläche (3) der Halteeinrichtung (2) ausgebildeten, länglichen Nut (4) gehalten sind, zu deren beiden Seiten jeweils ein sich parallel dazu erstrekkender Schlauch (10) vorgesehen ist.

12. Prüfvorrichtung nach Anspruch 11, **dadurch gekennzeichnet, daß** die Schläuche (10) jeweils in einer länglichen Aussparung (11) angeordnet sind.

13. Prüfvorrichtung nach Anspruch 12, **dadurch gekennzeichnet, daß** die Querschnittsfläche der Schläuche (10) im nicht mit Druck beaufschlagten Zustand kleiner als jene der Aussparungen (11) sind.

14. Prüfvorrichtung nach Anspruch 12 oder 13, **dadurch gekennzeichnet, daß** die Tiefe der Aussparungen (11) kleiner als der Durchmesser der Schläuche (10) ist.

15. Prüfvorrichtung nach einem oder mehreren der Ansprüche 10 bis 14, **dadurch gekennzeichnet, daß** die Schläuche (10) mit ihren von der Druckerzeugung entfernten Enden zu einem Schlauch zusammengeführt sind, in dem ein Druckmesser vorgesehen ist.

16. Prüfvorrichtung nach einem oder mehreren der vorhergehenden Ansprüche, **dadurch gekennzeichnet, daß** die Grundfläche (3) der Halteeinrichtung (2) in Richtung der hintereinander angeordneten Schaufeln (6) nach außen gekrümmt ist.

## Claims

1. A test device for damping members of rotor blades, comprising a holding means which is to be mounted on a vibration device and in which at least two blades are held, wherein a damping member is to be arranged between the holding means and the blades, **characterised in that** at least one pressurisable, expandable body (10) is arranged between the holding means (2) and the damping member (9).

2. A test device according to claim 1, **characterised in that**, in the pressurised state, the body (10) is supported against the holding means (2) and is pressed flat against the damping member (9).

3. A test device according to claim 1 or 2, **characterised in that** the body (10) is arranged in a recess (11).

4. A test device according to claim 3, **characterised in that** the recess (11) is formed in a base surface (3) of the holding means (2).

5. A test device according to claim 3, **characterised in that** the recess (11) is formed in a supporting plate arranged on the base surface (3) of the holding means (2).

6. A test device according to one or more of claims 3 to 5, **characterised in that** the damping member (9) completely covers an open side of the recess (11).

7. A test device according to one or more of claims 3 to 6, **characterised in that**, in the pressurised state, the body (10) rests fully against an underside (13) of the damping member (9), the underside (13) lying above the recess (11).

8. A test device according to one or more of the preceding claims, **characterised in that** the body (10) is pressurisable up to 15 bar.

9. A test device according to one or more of the preceding claims, **characterised in that** the body (10) is made of an elastomer.

10. A test device according to one or more of the preceding claims, **characterised in that** the body (10) is a tube.

11. A test device according to claim 10, **characterised in that** the blades (6) are held one behind the other in an elongate groove (4) formed in the base surface (3) of the holding means (2), and a tube (10) extending parallel to the groove (4) is provided on each side thereof.

12. A test device according to claim 11, **characterised in that** the tubes (10) are each arranged in an elongate recess (11).

13. A test device according to claim 12, **characterised in that** the cross-sectional area of the tubes (10) in the non-pressurised state is smaller than that of the recesses (11).

14. A test device according to claim 12 or 13, **characterised in that** the depth of the recesses (11) is smaller than the diameter of the tubes (10).

15. A test device according to one or more of claims 10 to 14, **characterised in that** the tubes (10) are joined at their ends remote from the generation of pressure to form a tube in which a pressure gauge is provided.

16. A test device according to one or more of the preceding claims, **characterised in that** the base surface (3) of the holding means (2) is curved outwards in the direction of the blades (6) arranged one behind the other.

## Revendications

1. Dispositif d'essai pour des éléments d'amortissement d'aubes mobiles, avec un système de retenue devant être appliqué contre un dispositif de vibrations, dans lequel sont maintenues au moins deux aubes, un élément d'amortissement devant être placé entre le système de retenue et les aubes, **caractérisé en ce qu'**au moins un corps (10) extensible pouvant être pressurisé est disposé entre le système de retenue (2) et l'élément d'amortissement (9).

2. Dispositif d'essai selon la revendication 1, **caractérisé en ce que** le corps (10) s'appuie à l'état pressurisé contre le système de retenue (2), et exerce une pression en nappe contre l'élément d'amortissement (9).

3. Dispositif d'essai selon la revendication 1 ou 2, **caractérisé en ce que** le corps (10) est disposé dans un évidement (11).

4. Dispositif d'essai selon la revendication 3, **caractérisé en ce que** l'évidement (11) est formé dans une surface de base (3) du système de retenue (2).

5. Dispositif d'essai selon la revendication 3, **caractérisé en ce que** l'évidement (11) est formé dans une plaque d'appui disposée sur la surface de base (3) du système de retenue (2).

6. Dispositif d'essai selon une ou plusieurs des revendications 3 à 5, **caractérisé en ce que** l'élément d'amortissement (9) recouvre entièrement une face ouverte de l'évidement (11).

7. Dispositif d'essai selon une ou plusieurs des revendications 3 à 6, **caractérisé en ce que** le corps (10) à l'état pressurisé repose entièrement contre une face inférieure (13) de l'élément d'amortissement (9) située au-dessus de l'évidement (11).

8. Dispositif d'essai selon une ou plusieurs des revendications précédentes, **caractérisé en ce que** le corps (10) peut être pressurisé à une pression allant jusqu'à 15 bars.

9. Dispositif d'essai selon une ou plusieurs des revendications précédentes, **caractérisé en ce que** le corps (10) est formé d'un élastomère.

10. Dispositif d'essai selon une ou plusieurs des revendications précédentes, **caractérisé en ce que** le corps (10) est un tuyau.

11. Dispositif d'essai selon la revendication 10, **caractérisé en ce que** les aubes (6) sont maintenues les unes derrière les autres dans une rainure (4) longitudinale formée dans la surface de base (3) du système de retenue (2), et des deux côtés de la rainure, respectivement un tuyau (10) est prévu qui s'étend parallèlement à celle-ci.

12. Dispositif d'essai selon la revendication 11, **caractérisé en ce que** les tuyaux (10) sont disposés respectivement dans un évidement longitudinal (11).

13. Dispositif d'essai selon la revendication 12, **caractérisé en ce que** les surfaces de section transversale des tuyaux (10), à l'état non pressurisé, sont inférieures à celles des évidements (11).

14. Dispositif d'essai selon la revendication 12 ou 13, **caractérisé en ce que** la profondeur des évidements (11) est inférieure au diamètre des tuyaux (10).

15. Dispositif d'essai selon une ou plusieurs des revendications 10 à 14, **caractérisé en ce que** les tuyaux (10) sont réunis avec leurs extrémités éloignées de la production de pression en un tuyau dans lequel est prévu un manomètre.

16. Dispositif d'essai selon une ou plusieurs des revendications précédentes, **caractérisé en ce que** la surface de base (3) du système de retenue (2) est incurvée vers l'extérieur dans le sens des aubes (6) disposées les unes derrière les autres.
